# EUROPEAN PATENT APPLICATION

(11) **EP 2 851 863 A1**
(43) Date of publication of application: **25.03.2015**
(21) Application number: 14181288.3
(22) Date of filing: 18.08.2014
(51) Int. Cl.: G06Q 50/06, G06Q 30/00

(54) **Method and system for providing energy creation service of turbine generator**

(30) Priority: 19.09.2013 JP 2013193693
(71) Applicant: Mitsubishi Hitachi Power Systems, Ltd., Yokohama-shi, Kanagawa 220-8401 (JP)
(72) Inventor: Hattori, Kenichi, Yokohama, Kanagawa 220-8401 (JP); Morimoto, Hiroshi, Yokohama, Kanagawa 220-8401 (JP); Montoya, Gustavo, Yokohama, Kanagawa 220-8401 (JP); Ishihara, Atsushi, Yokohama, Kanagawa 220-8401 (JP); Hayamizu, Tomoaki, Yokohama, Kanagawa 220-8401 (JP); Semba, Akitomi, Yokohama, Kanagawa 220-8401 (JP); Yabutani, Takashi, Hitachinaka-shi, Ibaraki 312-0046 (JP)
(74) Representative: MERH-IP Matias Erny Reichl Hoffmann

(57) **Abstract**

The present invention provides a method and a system for providing an energy creation service of a turbine generator (2). The users can receive a desired energy creation service without any initial investment and the providers of the service can expect sufficient profits. The method includes the steps of installing a new turbine generator (2A) for a user owning a power-generating facility having a turbine generator (2); obtaining power generation efficiency of the new turbine generator (2A) by a monitoring device (4); comparing the power generation efficiency of the new turbine generator (2A) and power generation efficiency of a turbine generator predetermined as a standard, by a computing device (7); performing a charging process for an excess of the power generation efficiency of the new turbine generator (2A) over the power generation efficiency of the standard turbine generator, by a processing device; and charging the user for a price ref lecting the excess of the power generation efficiency.

## Description

### FIELD OF THE INVENTION

The present invention relates to a method and a system for providing an energy creation service of a turbine generator, particularly to a method and a system for providing an energy creation service of a turbine generator, which enables providers of the service to receive, from the users as a charge for using the service, part of an effect (energy creation) yielded by introducing a new type of turbine generator free of charge without the users buying a turbine generator.

### BACKGROUND OF THE INVENTION

Conventionally, a hydrogen-cooling system is mainly used for turbine generators in 100-200MW-class private and IPP power generation facilities in large-scale plants, but the cost is high to maintain equipment related to the hydrogen-cooling. Therefore, a different cooling system, such as an air-cooling system, has been required.

The air-cooling system has not been substituted yet for the hydrogen-cooling system because the conventional turbine generators employing the air-cooling system show significantly smaller power generation efficiency than those employing the hydrogen-cooling system. However, a new type of turbine generator employing the air-cooling system, which has recently been developed and practically used, shows fairly greater power generation efficiency than those employing the conventional air-cooling system and exhibits equivalent efficiency to those employing the hydrogen-cooling system.

However, the new type of turbine generator employing the air-cooling system, which shows high efficiency, is not in widespread use yet because it is expensive.

Increasing the efficiency of the turbine generator leads to a reduction in power generation fuel and is required in terms of energy saving. It will be predominant to provide an energy creation service, which focuses on so-called energy creation that can acquire more amount of power generation corresponding to improved efficiency than that obtained by the conventional turbine generator without initial investment.

Japanese Patent Application Laid-Open No. 2001-155089 (JP 2001-155089) discloses a similar energy service carried out in a factory without initial cost. The service disclosed in JP 2001-155089 is an energy saving service and much different from the energy creation service.

JP 2001-155089 discloses a method for providing an energy saving service which obtains the current power consumption of a load facility owned by a user desiring energy saving, including motors for driving fans, blowers, pumps and the like, introduces an inverter into the load facility to obtain inverter control operation data when a rotational speed control of the motor is operated, obtains a merit charge corresponding to saving power consumption based on the difference between the current power consumption data and the inverter control operation data, and perform a charging process reflecting the merit charge on the content of a contract concluded in advance between the user and the service provider.

Recently, momentum is increasing toward an energy creation service which enables the service providers to receive, from the users as a charge for using the service, part of an effect (energy creation) yielded by introducing a new type of turbine generator free of charge without the users buying a turbine generator even for turbine generators employing an air-cooling or hydrogen-cooling system.

However, JP 2001-155089 only discloses an energy saving service which obtains the current power consumption of a load facility owned by a user desiring energy saving, including motors for driving fans, blowers, pumps and the like, introduces an inverter into the load facility to obtain inverter control operation data when a rotational speed control of the motor is operated, obtains a merit charge corresponding to saving power consumption based on the difference between the current power consumption data and the inverter control operation data, and perform a charging process reflecting the merit charge on the content of a contract concluded in advance between the user and the service provider. JP 2001-155089 does not disclose an energy creation service of turbine generators at all.

The present invention has been made in terms of the above background. An object of the present invention is to provide a method and a system for providing an energy creation service of a turbine generator, in which the users who desire an energy creation service can receive a desired energy creation service without any initial investment and the providers of the energy creation service can expect sufficient profits.

### SUMMARY OF THE INVENTION

In order to achieve the above obj ect, a method for providing an energy creation service of a turbine generator according to the present invention includes the steps of installing a new turbine generator for a user owning a power-generating facility having a turbine generator without an initial investment; obtaining power generation efficiency of the new turbine generator by a monitoring device; comparing the power generation efficiency of the new turbine generator and power generation efficiency of a turbine generator predetermined as a standard or power generation efficiency of an existing turbine generator, by a computing device; momentarily performing a calculating and charging process for a created amount of the power generation, which is an excess of the power generation efficiency of the new turbine generator over the power generation efficiency of the standard turbine generator or the power generation efficiency of the existing turbine generator, by a processing device; and/or charging the user for a price of the created amount of the power generation, reflecting the excess of the power generation efficiency.

Further, in order to achieve the above object, a system for providing an energy creation service of a turbine generator according to the present invention includes a monitoring device configured to monitor power generation efficiency of an existing turbine generator installed in a power-generating facility owned by a user; a computing device configured to receive a data of power generation efficiency of a new turbine generator installed instead of the existing turbine generator from the monitoring device through a communication system, to compare the data of the power generation efficiency of the new turbine generator and data of power generation efficiency of a turbine generator predetermined as a standard or power generation efficiency of an existing turbine generator, and to obtain a difference between the two data; and a processing device configured to, when the power generation efficiency of the new turbine generator exceeds the power generation efficiency of the standard turbine generator or power generation efficiency of an existing turbine generator, charge the user for a price of a created amount of the power generation, reflecting an excess of the power generation efficiency of the new turbine generator over the power generation efficiency of the standard turbine generator or power generation efficiency of the existing turbine generator.

The present invention has an advantageous effect that the users who desire an energy creation service can receive a desired energy creation service without any initial investment and the providers of the energy creation service can expect sufficient profits.

### BRIEF DESCRIPTION OF THE DRAWINGS

FIG. 1 is a conceptual diagram showing a system for providing an energy creation service of a turbine generator according to an embodiment of the present invention;
FIG. 2 is a block diagram showing one mode of operating the system for providing an energy creation service of a turbine generator according to the embodiment; and
FIG. 3 is a flowchart for performing a method for providing an energy creation service of a turbine generator according to the embodiment.

### DETAILED DESCRIPTION OF THE PREFERRED EMBODIMENTS

A description will be hereinafter made of a method and a system for providing an energy creation service of a turbine generator according to an embodiment of the present invention with reference to the drawings.

### [Embodiment 1]

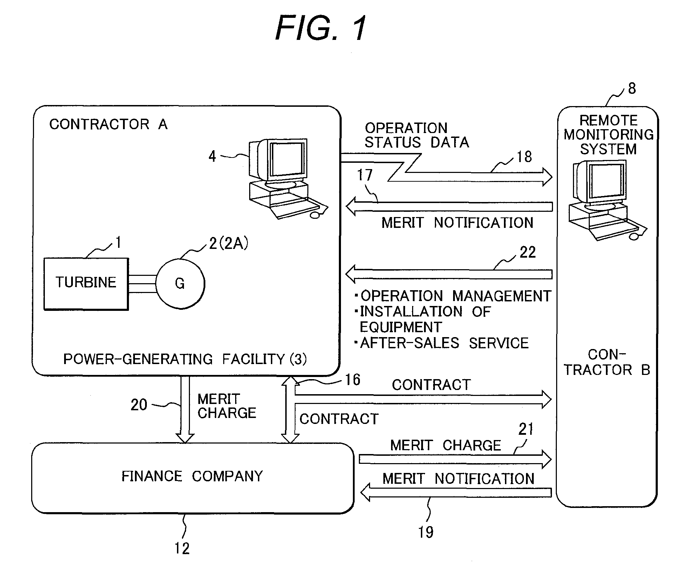

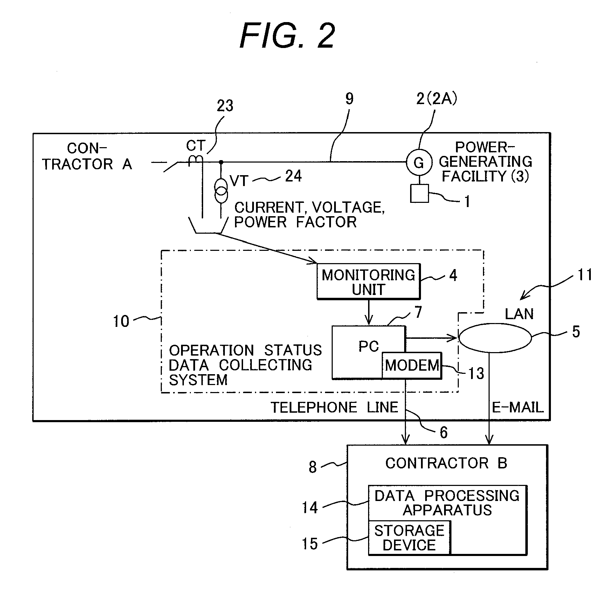

FIGS. 1 and 2 show a system for providing an energy creation service of a turbine generator according to the embodiment 1 of the present invention.

As shown in FIGS. 1 and 2, the system of the present embodiment includes a monitoring unit 4 which is a monitoring device, a computing device (PC) 7, and a remote monitoring system 8 which is a processing device. The monitoring unit 4 is installed in a power-generating facility 3 equipped with a turbine generator 2 connected to a turbine 1 owned by a user (contractor A), and monitors power generation efficiency of the turbine generator 2. The turbine generator 2 employs an air-cooling system. The computing device 7 is configured to receive data of power generation efficiency of a new turbine generator 2A from the monitoring unit 4. The new turbine generator 2A is installed by a service provider (contractor B) without an initial investment instead of the existing turbine generator 2, which is monitored by the monitoring unit 4. The computing device 7 is further configured to compare the data of the power generation efficiency of the new turbine generator 2A and data of power generation efficiency of a turbine generator which is predetermined as a standard, and to obtain the difference between the two data. The remote monitoring system 8 is configured to, based on the results obtained by the computing device 7, momentarily calculates and charges a created amount of power generation, which is an excess of the power generation efficiency of the new turbine generator 2A over the power generation efficiency of the standard turbine generator, and to charge the user (contractor A) for a price of the created amount of the power generation (the difference in power generation efficiency), reflecting the excess of the power generation efficiency.

Then, the contractor A is provided with the power-generating facility 3 to be described later and makes a contract (a contract including a distribution of merit charge) with the contractor B. Payments are performed via a finance company 12. A contract among the contractor A (the user), the contractor B (the service provider) and the finance company 12 is performed as indicated by an array 16 in FIG. 1.

In the system of the present embodiment configured in this way, the new turbine generator 2A is installed for the user (contractor A) owning the power-generating facility 3 having the turbine generator 2 without an initial investment. The monitoring unit 4 obtains the power generation efficiency of the new turbine generator 2A. The computing device (PC) 7 computes a difference between the power generation efficiency of the new turbine generator 2A obtained by the monitoring unit 4 and the power generation efficiency of the turbine generator predetermined as a standard. The remote monitoring system 8 momentarily calculates and charges the created amount of power generation, which is the excess of the power generation efficiency of the new turbine generator 2A over the power generation efficiency of the standard turbine generator, and charges the user (contractor A) for a price of the created amount of the power generation, reflecting the excess of the power generation efficiency.

With reference to FIG. 2, the present embodiment will be described in more detail. In FIG. 2, the new turbine generator 2A is connected to the power-generating facility 3 on a system 9 instead of the existing turbine generator 2. A current and a voltage are measured by an ammeter (CT) 23 and a voltmeter (VT) 24, respectively, which are installed in a line to which the new turbine generator 2A is connected, to obtain a power factor. These measured and obtained signals are transmitted to the monitoring unit 4 in an operation status data collecting system 10.

Operation data (power generation efficiency) of the new turbine generator 2A is calculated by the monitoring unit 4 based on the data collected and statistically obtained in this way. The result of the calculation is transmitted to the computing device (PC) 7.

The operation status data collecting system 10 collects and statistically obtains operation statuses of the new turbine generator 2A, installed instead of the existing turbine generator 2 in the power-generating facility 3, as the current operation data (power generation efficiency) and collects and statistically obtains operation data (power generation efficiency) of the turbine generator predetermined as a standard.

Further, the operation status data collecting system 10 includes the monitoring unit 4 that collects the operation data (power generation efficiency) of the standard turbine generator, the computing device (PC) 7 which computes and statistically obtains the operation data of the standard turbine generator, and a communication system 11, such as a LAN 5 or a telephone line 6, which transmits an integrated electric potential energy to the contractor B.

The calculation result obtained by the computing device (PC) 7 is transmitted to the contractor B by e-mail through the communication system 11, such as a modem 13 or the LAN 5.

This automatic transmission may be performed momentarily although it is adequately performed even once a day. This information collection is performed using the remote monitoring system 8 belonged to the contractor B, as shown in FIG. 1.

The above-described current operation data (power generation efficiency) of the new turbine generator 2A is transmitted to a data processing apparatus 14 in the remote monitoring system 8 and stored in a storage device 15. Incidentally, the same result is obtained even if the storage device 15 is installed in the operation status data collecting system 10 and the result of collecting the operation status data is transmitted to the data processing apparatus 14.

The transmitted operation data (power generation efficiency) and further the created merit charge can be immediately calculated by the data processing apparatus 14 belonged to the contractor B. The contractor A is notified of the calculation result. The merit charge may be calculated by the operation status data collecting system 10. A system configuration employing the remote monitoring system 8 is desirable to transfer the result of calculating the merit charge and the two operation data to the contractor B. According to this configuration, the remote monitoring system 8 performs the operation management.

The contractor B notifies the contractor A of the obtained merit charge as a merit notification. This is indicated by an arrow 17 in FIG. 1. This charging process may be performed using a financial institution, which is frequently used in the payment of money, such as the finance company 12 as shown in FIG. 1. In this case, a contract for mediation is concluded between the contractor A and the finance company 12 as indicated by an arrow 16 in FIG. 1. The merit notification is also sent from the contractor B to the finance company 12. This is indicated by an arrow 19 in FIG. 1. Based on the merit notification, the merit charge is paid to the contractor B from the contractor A through the finance company 12. This is indicated by arrows 20 and 21 in FIG. 1.

The service provider (contractor B) offers the operation management and after-sales service for the turbine generator as well as installation of the equipment. This is indicated by an arrow 22 in FIG. 1.

The operation data of the existing turbine generator 2 and the new turbine generator 2A are collected in the remote monitoring system 8 of the contractor B as operation status data. This is indicated by an arrow 18 in FIG. 1.

Next, a calculation example of a power-creation effect in the present embodiment will be described.

Parameters (a power factor and a voltage, for example) indicating the operation statuses of the power-generating facility 3 and generated power at the operation statuses are measured by the remote monitoring system 8. The power-creation effect is calculated using a result of the measurement and a contract-condition curve before power creation at the time of the contract.

An integrated electric potential energy before the power creation calculated from the curve at the time of the contract is statistically obtained, and an integrated electric potential energy under the power creation is statistically obtained momentarily. A power-creation effect of a day is obtained according to the difference between the two integrated electric potential energies at the end of the day.

A merit charge is obtained by multiplying the power-creation effect, i.e., the created electric potential energy by a merit charge per an electric potential energy. The charging process is performed by reflecting the merit charge on the content of the contract between the contractors A and B or among the contractors A and B and the finance company 12.

A part of the created power merit by the newly installed turbine generator 2A, for example, a half of the merit charge, is paid to the contractor B as a return merit. That is, the merit charge is paid after achievement of the energy creation effect. The contractor B calculates an energy creation power merit from the actual operation data according to the content of the contract among the contractors, and notifies the contractor A of the calculation result every day. Thus, the charging process is carried out based on the merit charge.

Incidentally, the contractor B may confirm the operation data before the charging process. The maintenance may be performed by the contractor B free of charge, and daily inspection may be performed by the contractor A.

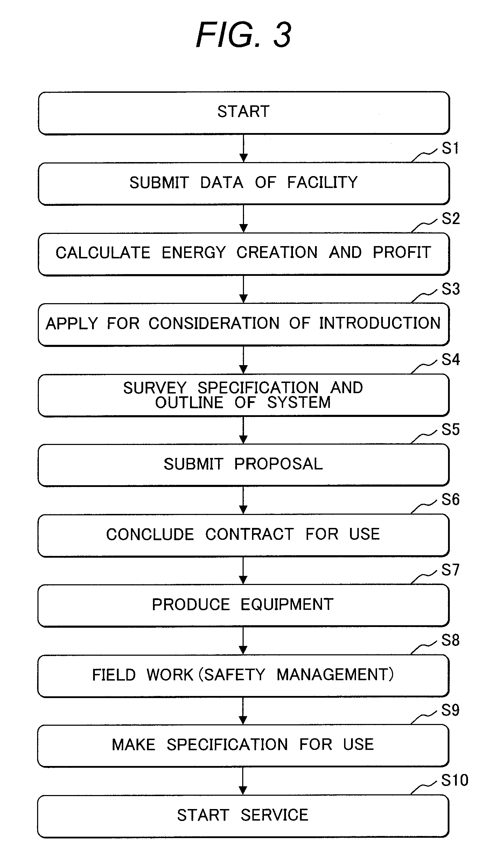

Next, with reference to FIG. 3, a flow for carrying out the energy creation service of the turbine generator in the present embodiment will be described.

As shown in the flow for carrying out the energy creation service of the turbine generator of FIG. 3, data of a power-generating facility is submitted from the contractor A (S1). Energy creation and profit is calculated by the contractor B on the basis of the submitted data (S2). The contractor B applies to the contractor A for a consideration of introducing facility (S3) if the profit is expected based on the result of the calculation of energy creation and profit. A survey for the specification and outline of the system is carried out (S4) if the contractor A agrees to the application for the consideration of introducing facility. A proposal for a newpower-generating facility is submitted from the contractor B to the contractor A based on the survey for the specification and outline of the system (S5). A contract for use of the power-generating facility is concluded (S6) if the contractor A agrees to the proposal from the contractor B. The production of equipment such as a turbine generator is started (S7). After the equipment is produced, field work (safety management) is done. Then, the equipment such as a turbine generator is installed (S8). Then, specifications for use are made (S9). Then, the energy creation service of the turbine generator is started (S10).

The present embodiment described above has an advantageous effect that the users who desire an energy creation service can receive a desired energy creation service without any initial investment and the providers of the energy creation service can expect sufficient profits.

In the above-described embodiment, the computing device 7 compares the power generation efficiency of the new turbine generator 2A and the power generation efficiency of the turbine generator predetermined as a standard, the remote monitoring system 8, which is a processing device, performs the charging process for the excess of the power generation efficiency of the new turbine generator 2A over the power generation efficiency of the standard turbine generator, and the user (contractor A) is charged for a price reflecting the excess of the power generation efficiency. The same effect as in the above embodiment can be obtained with a configuration in which the computing device 7 compares the power generation efficiency of the new turbine generator 2A and the power generation efficiency of the existing turbine generator 2, the remote monitoring system 8, which is a processing device, performs the charging process for the excess of the power generation efficiency of the new turbine generator 2A over the power generation efficiency of the existing turbine generator 2, and the user (contractor A) is charged for a price reflecting the excess of the power generation efficiency.

In the above-described embodiment, turbine generators employing an air-cooling system are described. It is needless to say that the present invention can be applied even to an embodiment including turbine generators employing a hydrogen-cooling system.

The present invention is not limited to the above embodiment and can be modified in various ways. The above embodiment has been described in detail to make the explanation of the present invention easily understood. The present invention is not limited to a structure including all the above-described configurations. It is alsopossible to replace part of a configuration of an embodiment with a configuration of another. It is also possible to add a configuration of an embodiment to a configuration of another embodiment. Part of a configuration of an embodiment can be added to, deleted from, or replaced with a configuration of another.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A method for providing an energy creation service of a turbine generator (2), comprising the steps of:
installing a new turbine generator (2A) for a user owning a power-generating facility (3) having a turbine generator (2);
obtaining power generation efficiency of the new turbine generator (2A) by a monitoring device (4);
comparing the power generation efficiency of the new turbine generator (2A) and power generation efficiency of a turbine generator (2) predetermined as a standard, by a computing device (7) ;
performing a charging process for an excess of the power generation efficiency of the new turbine generator (2A) over the power generation efficiency of the standard turbine generator (2), by a processing device; and
charging the user for a price reflecting the excess of the power generation efficiency.

2. The method according to claim 1,
wherein power generation efficiency of an existing turbine generator (2) is used for the power generation efficiency of the standard turbine generator.

3. A system for providing an energy creation service of a turbine generator, comprising:
a monitoring device (4) configured to monitor power generation efficiency of an existing turbine generator (2) installed in a power-generating facility owned by a user;
a computing device (7) configured to receive a data of power generation efficiency of a new turbine generator (2A) installed instead of the existing turbine generator (2) from the monitoring device (4) through a communication system (II), to compare the data of the power generation efficiency of the new turbine generator (2A) and data of power generation efficiency of a turbine generator predetermined as a standard, and to obtain a difference between the two data; and
a processing device configured to, when the power generation efficiency of the new turbine generator (2A) exceeds the power generation efficiency of the standard turbine generator, charge the user for a price reflecting an excess of the power generation efficiency of the new turbine generator (2A) over the power generation efficiency of the standard turbine generator.

4. The system according to claim 3,
wherein the power generation efficiency of the existing turbine generator (2) is used for the power generation efficiency of the standard turbine generator.

5. The system according to claim 3 or 4,
wherein the existing turbine generator (2), the new turbine generator (2A), and the standard turbine generator employ an air-cooling system or a hydrogen-cooling system.
